(19) Europäisches Patentamt / European Patent Office / Office européen des brevets

(11) **EP 2 903 063 A1**

(12) **EUROPEAN PATENT APPLICATION**
published in accordance with Art. 153(4) EPC

(43) Date of publication:
05.08.2015   Bulletin 2015/32

(51) Int Cl.:
*H01M 4/66* (2006.01)     *H01B 5/00* (2006.01)
*H01G 11/66* (2013.01)    *H01M 4/13* (2010.01)
*H01M 4/62* (2006.01)

(21) Application number: 13840765.5

(22) Date of filing: 18.09.2013

(86) International application number:
PCT/JP2013/075119

(87) International publication number:
WO 2014/050653 (03.04.2014 Gazette 2014/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.09.2012   JP 2012218519

(71) Applicants:
• Furukawa Electric Co., Ltd.
Chiyoda-ku
Tokyo 100-8322 (JP)
• UACJ Corporation
Tokyo 100-0004 (JP)
• UACJ Foil Corporation
Chuo-ku
Tokyo
1030026 (JP)

(72) Inventors:
• HARA, Hidekazu
Tokyo 100-8322 (JP)
• IIDA, Takahiro
Tokyo 100-8322 (JP)

• MORISHIMA, Yasumasa
Tokyo 100-8322 (JP)
• ITO, Takayori
Tokyo 100-8322 (JP)
• SAITO, Sohei
Tokyo 100-0004 (JP)
• KATO, Osamu
Tokyo 101-8970 (JP)
• HONKAWA, Yukiou
Tokyo 101-8970 (JP)
• YAEGASHI, Tatsuhiro
Tokyo 101-8970 (JP)
• KATAOKA, Tsugio
Kusatsu-shi
Shiga 525-0042 (JP)
• INOUE, Mitsuya
Kusatsu-shi
Shiga 525-0042 (JP)
• YAMABE, Satoshi
Kusatsu-shi
Shiga 525-0042 (JP)

(74) Representative: Gulde & Partner
Patent- und Rechtsanwaltskanzlei mbB
Wallstraße 58/59
10179 Berlin (DE)

(54) **COLLECTOR, ELECTRODE STRUCTURE, NONAQUEOUS ELECTROLYTE BATTERY, CONDUCTIVE FILLER, AND ELECTRICITY STORAGE COMPONENT**

(57)    The present invention provides a current collector having a conductive layer which is excellent in adhesion strength and can exhibit a PTC function for stably contributing to safety, when used for an electrode structure for non-aqueous electrolyte batteries or for electrical storage devices. A current collector, including a metal foil and a conductive layer formed on at least one side of the metal foil, the conductive layer being formed partially or entirely on the surface of the metal foil; is provided. Here, the conductive layer contains core shell particles including core particles 114 having insulating crystalline polymer as a main component, and a shell layer 116 having conductivity, the shell layer 116 being formed on the surface of the core particles 114.

EP 2 903 063 A1

**(Cont. next page)**

[FIG. 3]

114    116

$t_s$

$D_c$

118

$D_s$

**Description**

**TECHNICAL FIELD**

The present invention relates to current collectors, electrode structures, non-aqueous electrolyte batteries, conductive filler, and electrical storage devices.

**BACKGROUND**

Owing to its high energy density, lithium ion secondary batteries have been widely used as a power source for small-sized or portable electronic devices such as mobile phones and laptop computers. Further, in recent years, electric vehicles became popular due to environmental consideration, and thus utilization of the lithium ion secondary batteries as a power source of electric vehicles is expected. Accordingly, significance of the lithium ion secondary batteries has become high also as a power source for vehicles.

However, although lithium ion secondary batteries have high energy density, they are problematic in terms of safety, since a non-aqueous electrolyte solution is used. For example, in a case where the temperature of the battery becomes high due to unexpected external heating or due to internal heat generation, the non-aqueous electrolyte solution becomes decomposed. This would bring rise in internal pressure, resulting in defects such as inflated batteries, and in dangerous circumstances such as ignition. The internal heat generation of batteries can be caused by inappropriate usage, over charge, or internal short-circuit due to impact and the like.

Regarding such dangers, as a measure to improve safety of a battery, a technique to prevent increase in the internal pressure by using a safety valve, and a technique to install a PTC (Positive Temperature Coefficient) element which shows higher resistance when the temperature rises, thereby cutting off the current in exothermic circumstances, can be mentioned. For example, the PTC element can be fixed on a positive cap of a cylindrical battery.

However, the measure of fixing the PTC element onto the positive cap cannot correspond to the internal temperature increase of the battery. Therefore, it was problematic in that it cannot suppress the short circuit current when the internal temperature of the battery was raised due to internal short-circuit and the like.

Regarding the internal heat generation of the battery, the usage of a separator is widely known. When an abnormal heat generation occurs, the resin of the separator melts, thereby exhibiting a shut down function. However, the separator does not always melt at a portion separated from the place of heat generation, and thus the shut down function may not be exhibited. In addition, when the heat is continuously generated, the separator would deform and shrink, thereby resulting in a possibility of further internal short-circuit instead. Accordingly, there is a room for improvement in the safety against internal heat generation.

As one measure for improving safety against such internal short-circuit and internal heat generation, Patent Literatures 1 and 2 suggest a technique to provide a conductive layer having the PTC function (hereinafter, the conductive layer having the PTC function is referred simply as PTC layer) on the surface of the current collector. Patent Literature 1 discloses that an element having a positive temperature coefficient of resistance (PTC element) was provided on the electrode surface of at least one of the positive electrode current corrector and the negative electrode current collector, regarding a lithium secondary battery. In addition, Patent Literature 2 discloses that electron conductive particles having a PTC characteristic are coated on the surface of the active material particles, thereby obtaining secondary particles of the active material having an active portion and an inactive portion having the PTC characteristic.

On the other hand, Patent Literature 3 suggests of coating the current collector with a PTC layer comprising a crystalline thermoplastic resin, a conductive material, and a binding agent. Here, the crystalline thermoplastic resin and the conductive material are dispersed in a solution of the binding agent to prepare a paste, and then the paste is coated onto the current collector, followed by drying to remove the solvent, thereby obtaining the conductive layer.

Further, Patent Literature 4 suggests a technique to provide safety regarding a coin type lithium ion secondary battery, in which a conductive layer comprising a conductive material is formed in between a battery case and a positive electrode. Here, the conductive layer is formed by taking a resin as a core and coating the surface of the resin with a conductive substance.

**CITATION LIST**

**PATENT LITERATURE**

Patent Literature 1: JP H7-220755A
Patent Literature 2: JP H10-241665A

Patent Literature 3: JP 2001-357854A
Patent Literature 4: JP 2010-61941A

## SUMMARY OF THE INVENTION

### TECHNICAL PROBLEM

However, the afore-mentioned conventional techniques had room for improvement in view of the following points.

First of all, regarding the techniques of Patent Literatures 1 and 2, a sheet comprising a mixture of polyethylene and conductive carbon as the PTC layer is attached to the current collector. However, adhesion strength of polyethylene with metal is weak, and adhesion strength of polyethylene with the active material layer is also not high. Accordingly, the active material layer tends to easily peel off from the current collector. This would result in circumstances where the internal resistance of the battery increases, and deterioration in the characteristics are seen, such as shortening of the lifetime during charge/discharge cycles of the battery.

Secondly, regarding the technique of Patent Literature 3, crystalline thermoplastic resin and the conductive material gets separated from each other during the drying process, since the wettability of the crystalline thermoplastic resin and the conductive material are different from each other. Therefore, it is extremely difficult to obtain a conductive layer having the crystalline thermoplastic resin and the conductive material dispersed uniformly. An ununiformly dispersed conductive layer can suffer defects such as the disability to exhibit the desired PTC property and the increase in the initial resistance.

Thirdly, in the coin type battery disclosed in Patent Literature 4, the active material layer and the battery case can be strongly adhered with each other by engaging the battery cases. However, with respect to lithium ion secondary batteries of wound type and laminate type, adhesion cannot be achieved in such manner. Therefore, a certain amount of binder need be added in order to maintain adhesion of the battery case with the current collector comprising the active material layer and the metal foil. Here, when there is no binder and the resin as the core melts, the melt resin would not form a coating. Accordingly, the conductive particles with the coating would aggregate, thereby forming a conductive path. In such case, the desired increase in the resistance would not occur. This is since the density of the conductive particles with respect to the entire conductive layer would be higher than that of the case where the binder is added, and since the phase separation when the resin melts does not always occur in the direction so that the resin component is separated towards the surface.

The present invention has been made by taking the afore-mentioned circumstances into consideration. An object of the present invention is to provide a current collector and the like having a conductive layer which is excellent in adhesion strength and can exhibit a PTC function for stably contributing to safety, when used for an electrode structure for capacitors, non-aqueous electrolyte batteries and the like and for an electrical storage device for capacitors, non-aqueous electrolyte batteries and the like.

### SOLUTION TO PROBLEM

According to the present invention, A current collector, comprising: a metal foil; and a conductive layer formed on at least one side of the metal foil, the conductive layer being formed partially or entirely on the surface of the metal foil; is provided. Here, the conductive layer comprises core shell particles comprising: core particles having insulating crystalline polymer as a main component; and a shell layer having conductivity, the shell layer being formed on the surface of the core particles.

According to such structure, a current collector provided with a conductive layer exhibiting an excellent PTC function owing to the effect of the core shell particles, can be obtained. That is, according to such structure, a current collector having a conductive layer which is excellent in adhesion strength and can exhibit a PTC function for stably contributing to safety, when used for an electrical storage device or for an electrode structure, can be obtained.

In addition, according to the present invention, an electrode structure comprising the afore-mentioned current collector and an active material layer provided on the conductive layer of the current collector, is provided.

According to such structure, since the current collector provided with the conductive layer exhibiting an excellent PTC function owing to the effect of the core shell particles is used, an electrode structure which can exhibit a PTC function for stably contributing to safety, when used for an electrical storage device or for an electrode structure, can be obtained.

In addition, according to the present invention, an electrical storage device for non-aqueous electrolyte batteries and the like, comprising the afore-mentioned current collector and an active material layer provided on the conductive layer of the current collector, is provided.

According to such structure, since the current collector provided with the conductive layer exhibiting an excellent PTC function owing to the effect of the core shell particles is used, a non-aqueous electrolyte battery or an electrical storage device which can exhibit a PTC function for stably contributing to safety, when used for an electrical storage device or for an electrode structure, can be obtained.

In addition, in the present invention, a conductive filler including a core shell particle, comprising: a core particle having insulating crystalline polymer as a main component and a shell layer having conductivity, the shell layer being formed on the surface of the core particle, is provided. By applying such conductive filler not only for the afore-mentioned current collector but also for the active material layer, the conductive filler can be used in the electrode structure and the electrical storage device. Accordingly, PTC function customized for various needs can be achieved.

**EFFECT OF THE INVENTION**

According to the present invention, a current collector having a conductive layer which is excellent in adhesion strength and can exhibit a PTC function for stably contributing to safety, when used for an electrode structure and for an electrical storage device, can be obtained.

**BRIEF DESCRIPTION OF THE DRAWINGS**

[FIG. 1] FIG. 1 is a cross-sectional view showing a structure of an electrode structure using the current collector of the present embodiment.
[FIG. 2] FIG. 2 is a cross-sectional view showing a structure of a conductive layer of the current collector of the present embodiment.
[FIG. 3] FIG. 3 is a cross-sectional view showing a core shell particle contained in the conductive layer of the current collector of the present embodiment.
[FIG. 4] FIG. 4 is a picture of the surface of the core shell particle obtained in Example 1, taken by scanning electron microscopy (SEM).
[FIG. 5] FIG. 5 is a graph showing the results of PTC function evaluation regarding the current collector obtained in Example 1.
[FIG. 6] FIG. 6 is a graph showing the results of PTC function evaluation regarding the current collector obtained in Comparative Example 1.
[FIG. 7] FIG. 7 is a graph showing the results of PTC function evaluation regarding the current collector obtained in Comparative Example 3.

**DESCRIPTION OF EMBODIMENTS**

Hereinafter, the embodiments of the present invention will be explained with reference to the drawings. Here, in all of the drawings, the same symbols are provided for the similar constitutional elements, and the explanations for them are omitted where applicable. In addition, "A to B" in the present specification shall mean "A or more and B or less".

<Overall Structure of Electrode>

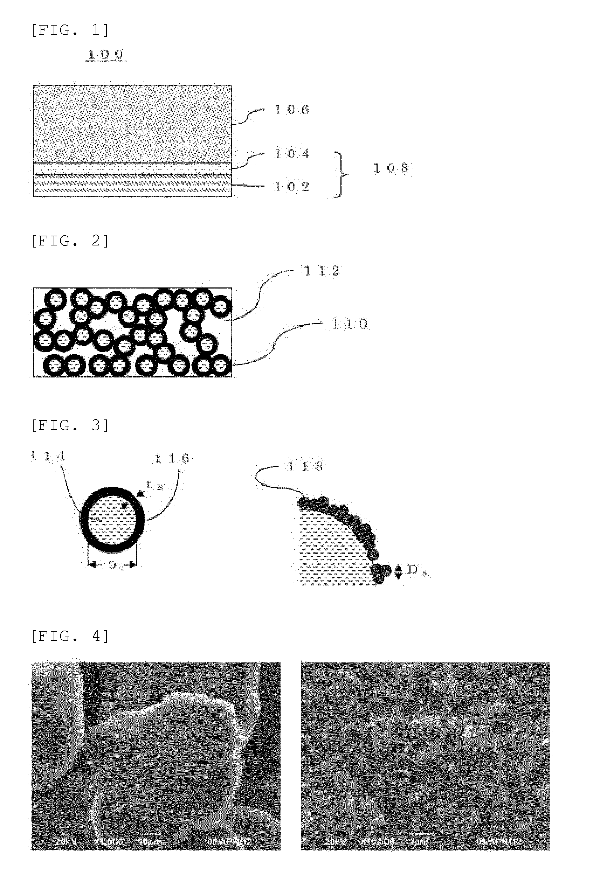

FIG. 1 is a cross-sectional view showing a structure of an electrode structure using the current collector of the present embodiment. The electrode structure 100 using the current collector 108 of the present embodiment has a safety function against over charge and unexpected over heating when the electrode structure is used for an electrical storage device of non-aqueous electrolyte batteries and the like.

The current collector 108 of the present embodiment comprises a metal foil 102 and a conductive layer 104 formed on at least one side of the metal foil 102. Here, the conductive layer 104 can be formed on a part of the surface or on the entire surface. In addition, the electrode structure 100 comprises the current collector 108 and an active material layer 106 provided on the conductive layer 104 of the current collector 108.

FIG. 2 is a cross-sectional view showing the structure of the conductive layer of the current collector of the present embodiment. The conductive layer 104 of the current collector 108 of the present embodiment comprises a conductive filler (herein after also referred to as core shell particles) 110 and an insulating organic binder 112.

FIG. 3 is a cross-sectional view showing the structure of the conductive filler 110 contained in the conductive layer of the current collector of the present embodiment. Here, the conductive filler 110 comprises a core particle 114 having an insulating crystalline polymer as a main component, and a shell layer 116 having conductivity formed on the surface of the core particle 114.

According to such structure, the conductive layer can be provided with an excellent PTC function, owing to the effect of the conductive filler 110. In addition, the current collector 108 provided with the conductive layer 104 having excellent adhesion with the metal foil 102 and with the active material layer 106 and exhibiting excellent PTC function can be obtained, owing to the combined effect of the conductive filler 110 and the insulating organic binder 112. That is, according to such structure, the current collector, when used for the electrode structure 100 of non-aqueous electrolyte batteries or electrical storage devices, having excellent adhesion strength and capable of satisfying capacity requirement regarding electrical storage devices such as non-aqueous electrolyte batteries and the like (represented by the lithium ion battery), can be obtained. Here, the current collector 108 can also exhibit the PTC function for stably contributing to safety in case of emergency.

Hereinafter, each of the constitutional elements will be explained in detail.

<Metal Foil>

As the metal foil 102 used in the present embodiment, various metal foils for the secondary batteries or for the capacitors can be used. Specifically, various metal foils 102 for the positive electrode and for the negative electrodes can be used. For example, foils of aluminum, copper, stainless steel, nickel and the like can be used. Among these, foils of aluminum and copper are preferable in terms of the balance between conductivity and cost. Here, in the present specification, "aluminum" includes aluminum and aluminum alloy, and "copper" includes pure copper and copper alloy. In the present embodiment, aluminum foil can be suitably used for the positive electrode of a secondary battery, negative electrode of a secondary battery, or for the electrode of a capacitor. On the other hand, copper foil can be used for the negative electrode of the secondary battery. There is no particular limitation regarding the type of the aluminum foil. Here, the ones commonly known as the aluminum foil for usage in batteries, such as 1000 series aluminum, 3000 series aluminum and the like can be used. The same can be said with the copper foil, and thus there is no particular limitation. Here, rolled copper foil and electrolytic copper foil are preferably used.

There is no particular limitation regarding the thickness of the metal foil 102, and the thickness is adjusted depending on its intended usage. Here, when it is used for a secondary battery, it is preferable that the thickness is $5\mu m$ or more and $50\mu m$ or less. When the thickness is less than $5\mu m$, the strength of the foil would be insufficient, and thus there are cases where it becomes difficult to form the conductive layer and the like. On the other hand, when the thickness exceeds $50\mu m$, other constituting elements, particularly the active material layer 106 or the electrode material layer (not shown) need be made thinner. Especially when the metal foil is used as an electrical storage device of secondary batteries or capacitors and the like, this can result in cases where the thickness of the active material layer 106 need be thinned, resulting in insufficient capacity.

<Conductive Layer>

The conductive layer 104 of the present embodiment is a layer formed on the surface of the metal foil 102, and comprises a conductive filler 110 having a core shell structure and an insulating organic binder 112. Here, the core shell structure is structured by forming a shell layer 116 having conductivity on the surface of a particle made of a core particle 114. The conductive layer 104 can achieve the PTC function, since the resistance of the conductive layer 104 is sufficiently low at normal condition, and increases rapidly when the temperature rises from around the melting temperature of the core particle 114 to the melting point. Accordingly, the discharging current can be suppressed at temperatures above the melting point.

The thickness of the conductive layer 104 can be determined arbitrarily. Here, when the conductive layer 104 is too thick, compensation such as alteration of the constitution of the active material layer need be made. This can result in decrease in the capacity of the battery, and is thus unfavorable. On the other hand, when the conductive layer 104 is too thin, there are cases where the increase in the resistance is not sufficient so as to suppress the discharging current of the battery, even when the PTC function is realized. Therefore, the thickness of the conductive layer 104 is preferably 0.1 to $100\mu m$, more preferably 0.5 to $10\mu m$, and further preferably 1 to $5\mu m$.

As a method for forming such conductive layer 104, a method including mixing and dispersing of the insulating organic binder 112 and the conductive filler 110 in a solvent to obtain a paste, followed by coating of the paste onto the metal foil 102 and drying of the coating, can be mentioned for example. Here, the insulating organic binder 112 can be dissolved in the solvent used, or can be dispersed as fine particles. In addition, the solvent can be an organic solvent or water.

Here, there is no particular limitation regarding the method of coating, and known methods such as casting method, bar coater method, dip method, gravure coating method and the like can be used. The same can be said with the method of drying, and drying can be carried out by the heating process in a hot air circulating passage.

In addition, the surface condition of the conductive layer 104 of the present embodiment can be adjusted arbitrarily. For example, the surface can be roughened so that the contacting area with the active material layer 106 is increased, thereby further increasing the adhesion strength with the active material layer 106, resulting in decrease in the contact resistance.

The PTC function of the present embodiment is achieved by the conductive filler 110. The conductive filler 110 of the present embodiment can be used in a similar manner as the known conductive filler and can realize the PTC function. Therefore, the conductive filler 110 can be formulated not only in the conductive layer but also in the active material layer. In addition, the conductive filler 110 can be used in known materials having an intention to use the conductive filler.

Regarding the conductive filler 110 of the present embodiment, the core particle 114 contains insulating crystalline polymer as the main component, and the shell layer 116 contains the conductive material. The conductive fillers 110 contained in the conductive layer 104 are in contact with each other or are sufficiently close with each other. Since the surface of the conductive filler 110 has conductivity, a conductive path can be formed. Accordingly, the conductive layer shows sufficiently low resistance at normal temperature. On the other hand, when the temperature of the conductive filler 110 becomes high and reaches the melting point of the insulating crystalline polymer contained in the core particles 114, the core particles 114 melt and their volume expand. In such case, the conductive path would be separated, since the shell layer 116 cannot follow the expansion. Otherwise, the conductive material contained in the shell layer 116 becomes dispersed in the melt insulating crystalline polymer, resulting in separation of the conductive path. In another case, depending on the compatibility of the insulating crystalline polymer and the conductive material, the conductive filler 110 undergo phase separation, thereby forming a film of the insulating crystalline polymer on the surface of the conductive layer 104. Rapid increase in the resistance of the conductive layer 104 is achieved by either one of these mechanisms or by a combination of these mechanisms.

The conductive filler of the present embodiment has a core shell structure. Therefore, ratio of the amount of the conductive material used with respect to that of the insulating crystalline polymer can be reduced at a large extent, when compared with conventional conductive fillers. That is, the adoption of the core shell structure enables to increase the ratio of the insulating crystalline polymer with respect to the conductive material, and thus it is effective in terms of realizing high insulating property when the PTC function is realized.

In addition, as a general method for providing the PTC function to the conductive layer 104, a method including the mixing of the conductive material and the core particles 114 can be mentioned. However, since the compatibility of the conductive material and the core particles 114 are different from each other, mere mixing would end up in separation. Accordingly, it is difficult to form a film having both materials dispersed uniformly. Further, in order to allow the conductive layer 104 to have sufficiently low resistance at normal temperature, a large amount of conductive material need be formulated. As a result, there are cases where the increase in resistance cannot be achieved even at elevated temperatures. On the other hand, when the formulation amount of the conductive material is insufficient, the resistance at normal temperature would be high. These problems can be solved by using the conductive filler 110 of the present embodiment having the core shell structure.

The ratio of the conductive filler 110 contained in the conductive layer 104 can be determined arbitrarily so long as it does not deviate the purpose of the present invention. However, when the ratio of the conductive filler 110 with respect to the conductive layer 104 is too high, the ratio of the insulating organic binder 112 would be low, thereby resulting in decrease in the adhesion property and unstable PTC function realization. Therefore, it is unfavorable. On the other hand, when the ratio of the conductive filler 110 is too low, the increase in the resistance when the PTC function is realized would be insufficient, and thus the effect for suppressing the current would be insufficient.

Although depending on the shape, grain size, ratio of the thickness of the shell layer 116 and the core particles 114 in the core shell structure, and the type of the insulating organic binder 112, the preferable ratio of the conductive filler 110 contained in the conductive layer 104 is generally 0.01 to 0.9, more preferably 0.05 to 0.5, and most preferably 0.1 to 0.3, when the total volume of the conductive filler 110 and the insulating organic binder 112 is taken as 1. Here, the ratio is a volume ratio. The ratio of the conductive filler can be in the range of two values selected from the group consisting of 0.01, 0.02, 0.03, 0.04, 0.05, 0.06, 0.07, 0.08, 0.09, 0.1, 0.2, 0.3, 0.4, 0.5, 0.6, 0.7, 0.8, and 0.9.

In addition, regarding the conductive filler 110 contained in the conductive layer 104, one type of filler can be used alone, or two or more types can be used in combination. For example, by using conductive filler 110 containing two types of core particles 114 having different melting points, the PTC function can be realized at two stages, thereby enabling realization of the PTC function for a wide temperature range.

Regarding the conductive filler 110 having the core shell structure of the present embodiment, the core particle 114 contains insulating crystalline polymer as the main component, and the shell layer 116 contains the conductive material. The conductive filler 110 can have an arbitrarily shape. For example, sphere shaped fillers, flat shaped fillers, and fiber shaped fillers can be used. Here, particles having an aspect ratio of larger than 1, such as the flat shaped fillers and fiber shaped fillers are preferable since they can achieve lower resistance with the same formulation ratio as the sphere shaped fillers. Aspect ratio of larger than 2 is more preferable, and larger than 3 is further preferable. Here, the aspect ratio is "maximum diameter / minimum diameter" of a particle, and can be obtained from the image of the particle taken with an optical microscope or with an electron microscope for example. Here, the aspect ratio can be larger than the value selected from the group consisting of 1, 2, 3, 4, 5, 6, 7, 8, 9, 10, 20, 30, 40, 50, 60, 70, 80, 90, and 100. The aspect ratio can also be in the range of two values selected the afore-mentioned group (excluding the two values of 1 and 100).

The grain size of the conductive filler 110 having the core shell structure according to the present embodiment can be arbitrarily adjusted by taking into account the desired thickness of the conductive layer 104. Here, the grain size is an average grain size obtained from the image of the particle taken with an optical microscope or with an electron microscope. Specifically, the grain size can be obtained as an arithmetic mean value of the diameters (minimum diameter in case of particles with high aspect ratio) of 100 particles observed.

Regarding the conductive filler 110 having the core shell structure, there are cases where sufficient PTC function cannot be exhibited when the shell layer having conductivity is too thick. When the shell layer 116 is thick, the amount of the insulating crystalline polymer becomes less, and thus the conductive path would not be sufficiently separated even when the polymer melts. Accordingly, there is a possibility that the PTC function cannot be exhibited. In addition, in a case where the insulating crystalline polymer undergoes phase separation to form an insulating film, thick shell layer 116 would require longer time for the insulating crystalline polymer to move from the inner side towards the surface of the conductive filler. Accordingly, the PTC function cannot be exhibited instantly when the temperature rises. On the other hand, the effect of the present invention would not be impaired merely by the shell layer of the conductive filler 110 being thin, so long as it is within the range not impairing the conductivity of the conductive layer 104. However, when the shell layer is too thin, it would become difficult to form the shell layer as intended onto the core particles 114.

That is, regarding the conductive filler 110 having the core shell structure, there is a preferable ratio of the thickness of the shell layer 116 with respect to the grain size of the core particle 114. Here, when the thickness of the shell layer 116 is taken as $t_s$, and the grain size of the core particle 114 is taken as $D_c$, the value of "a" given by the following Formula 1 is preferably 1.003 to 8, and more preferably 1.003 to 2.

$$a = (1 + 2t_s / D_c)^3 \quad (Formula\ 1)$$

Here, the value of "a" represents the volume ratio of the core shell particles with respect to the core particles. When the ratio becomes large, the thickness of the shell layer becomes large. Here, the value of "a" being 8 means that the radius of the core particles is the same as the thickness of the shell layer, and the value of "a" being 2 means that the volume of the shell layer and the volume of the core particles are the same. In addition, when the value of "a" becomes small, the thickness of the shell layer becomes thin. The value of "a" being 1.003 means that the thickness of the shell layer is 0.1% of the core particles. Here, the value of "a" can be in the range of two values selected from the group consisting of 1.003, 1.005, 1.01, 1.02, 1.03, 1.04, 1.05, 1.1, 1.5, 2.0, 2.5, 3.0, 3.5, 4.0, 4.5, 5.0, 5.5, 6.0, 6.5, 7.0, 7.5, and 8.0.

Although it is desirable that the range of the value of "a" preferable for exhibiting the PTC function is satisfied by all of the conductive fillers 110 contained in the conductive layer 104, it is not always necessary to satisfy such conditions. It would be sufficient if the average of the entire conductive fillers 110 contained in the conductive layer 104 satisfy such conditions. That is, the "a" represented in Formula 1 can be replaced with "a'" represented by Formula 2, where the volume of the core particles 114 contained in the entire core shell particles 110 of the conductive layer 104 is taken as $V_c$, and the volume of the conductive material as the shell layer 116 is taken as $V_s$. Here, regarding the entire conductive fillers 110 contained in the conductive layer 104, it is preferable that the value of "a'" is in the range of 1.003 to 8, and more preferably in the range of 1.003 to 2.

$$a' = (1 + V_s / V_c) \quad (Formula\ 2)$$

Here, the value of "a'" can be in the range of two values selected from the group consisting of 1.003, 1.005, 1.01, 1.02, 1.03, 1.04, 1.05, 1.1, 1.5, 2.0, 2.5, 3.0, 3.5, 4.0, 4.5, 5.0, 5.5, 6.0, 6.5, 7.0, 7.5, and 8.0.

In addition, regarding the conductive filler 110 having the core shell structure, the shell layer 116 need not cover the core particles 114 entirely, and the core particles can be partially exposed, so long as the shell layer 116 having conductivity can form the conductive path on the surface of the core particles 114.

With respect to the conductive filler 110 having the core shell structure of the present embodiment, the shell layer 116 having conductivity comprises a conductive material. Here, there is no particular limitation for the conductive material, so long as it can form the shell layer 116 having high conductivity onto the core particles 114 comprising insulating crystalline polymer. Here, metal, carbon material, conducting polymer and the like can be used. In addition, the shell layer 116 can be a uniform film, or can be an aggregate of particles.

As specific examples of the conductive material, gold, silver, copper, platinum, nickel, cobalt, iron, titanium, aluminum and alloys thereof can be mentioned as the metal material; acetylene black, Ketjen black, carbon nanotubes, carbon nanofibers, flaky graphite and the like can be mentioned as the carbon material; and polyolefin formulated with conductive particles in addition to polymer itself having conductivity can be mentioned as the polymer material provided with conductivity.

As a method for forming the shell layer 116 having conductivity onto the surface of the core particles 114 comprising insulating crystalline polymer, the following methods can be mentioned for example. A method in which a metal film is formed onto the surface of the core particles 114 by nonelectrolytic plating or deposition of the metal; a mechanochemical method in which the shell layer 116 comprising conductive particles 118 is formed onto the surface of the core particles 114 by subjecting the core particles 114 comprising insulating crystalline polymer and powder of the conductive particles 118 comprising metal particles, conductive carbon, or conducting polymer; and a method in which a fiber obtained by melting the conducting polymer and the insulating crystalline polymer for structuring the core, followed by two-layer extrusion to obtain a fiber, and then the fiber is subjected to cutting and pulverizing.

Among these, it is preferable that the shell layer 116 comprises an aggregate of the conductive particles 118 or conducting polymer. This is since forming of the metal film onto the core particles 114 usually require complex manufacturing process, and thus can be unfavorable in terms of cost.

In addition, when the shell layer 116 is formed with the aggregate of the conductive particles 118, the shell layer 116 is generally fragile, since there is no binder in between the conductive particles 118. Accordingly, when the core particles 114 comprising insulating crystalline polymer melt and exhibit the PTC function, separation in the conductive path easily occur. That is, it is favorable for exhibiting the PTC function.

On the other hand, when the shell layer 116 is formed with the aggregate of conductive particles 118, the conductive particles 118 are prone to falling off. When the amount of such fallen off conductive particles 118 is small, there would be no problem. However, when the amount becomes large, an unintended conductive path would be formed in the conductive layer 104, thereby resulting in a possibility of impairment in the PTC function. Such condition tends to occur especially when the grain size $D_c$ of the core particles 114 is the same with or smaller than the grain size $D_s$ of the conductive particles 118 forming the shell layer 116.

That is, when the shell layer 116 of the conductive filler 110 having the core shell structure is formed with the aggregate of the conductive particles 118, it is preferable that the grain size $D_s$ of the conductive particles 118 is further smaller than the grain size $D_c$ of the core particles 114, in terms of sufficiently suppressing falling off of the conductive particles 118 forming the shell layer 116. That is, it is preferable that the value of "b" represented by the following Formula 3 is 1 or less, more preferably 0.1 or less, and further preferably 0.01 or less.

$$b = D_s / D_c \ (Formula \ 3)$$

Here, the value of "b" can be in the range of two values selected from the group consisting of 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, and 1.

When the shell layer 116 is formed with the aggregate of the conductive particles 118, it is preferable to use the conductive particles 118 comprising the carbon material among others. This is preferable since the aggregate of the conductive particles 118 have lower specific gravity compared with the conductive particles 118 comprising metal, side reaction hardly occur especially when installed in the lithium ion secondary battery, and the conductive particles having smaller grain size is easily obtained.

In addition, the method in which the shell layer 116 comprising conductive polymer is prepared by two-layer extrusion and the like is superior in the point that the conductive filler 110 having the core shell structure can be manufactured continuously, and that the afore-mentioned problem of falling off of the conductive polymer is suppressed. In addition, the PTC function can be improved by using the polymer having crystallinity as the polymer contained in the conductive polymer.

On the other hand, the core particles 114 of the conductive filler 110 having the core shell structure according to the present embodiment comprises the insulating crystalline polymer as its main component. As the insulating crystalline polymer, polyethylene, polypropylene, ethylene-based copolymers such as ethylene-glycidyl methacrylate copolymer and ethylene-vinyl acetate copolymer, polyvinylidene fluoride, polyester, and acid-modified polymers thereof can be mentioned for example. One type of these polymers can be selected as the insulating crystalline polymer, or more than one type of these polymers can be selected. Among these, it is preferable to use the polymer having high crystallinity, in terms of the PTC function. Here, it is preferable to use polyethylene, polypropylene, or ethylene-based copolymer.

Here, in the above explanation, an embodiment in which the metal particles, conductive carbon, or the conductive polymer is contained alone as the conductive particles 118 in the shell layer 116 having conductivity, was given. However, it is not intended to exclude an embodiment in which the metal particles, conductive carbon, and the conductive polymer are blended together. That is, the conductive particles 118 (conductive carbon) and the conductive polymer can be blended together in the shell layer 116 having conductivity. Suitable PTC effect can be obtained also in such case, as shown in the following Examples.

Among these, regarding a case where the conductive carbon is used, the shell layer 116 formed with the aggregate of the conductive carbon is generally fragile, since there is no binder in between the conductive carbons. Accordingly, when the core particles 114 comprising the insulating crystalline polymer melt and the PTC function is realized, conductive path is easily separated. On the other hand, regarding a case where the conductive polymer is used, it is superior in the point that the conductive filler having the core shell structure can be manufactured continuously since the shell layer 116 comprising conductive polymer can be prepared by the two-layer extrusion and the like. In addition, the problem of falling off of the conductive polymer is suppressed. Further, the PTC function can be improved by using the polymer having crystallinity as the polymer contained in the conductive polymer. Regarding a case where the metal particles are used, the conductivity at temperatures of normal usage is excellent. This is also favorable for the realization of the PTC function.

On the other hand, regarding a case where the metal particles are used, it is usually unfavorable to form the metal film onto the core particles 114 in terms of the complicated manufacturing process and the cost. Accordingly, the usage of the metal particles is less favorable compared with the usage of the conductive carbon or the conductive polymer. When the conductive carbon and the conductive polymer are compared with each other, it is favorable to use the conductive carbon in terms of the manufacturing cost and the availability.

In addition, as described above, the PTC function is realized by the melting of the insulating crystalline polymer, which is the main component of the core particles 114. Therefore, the melting point becomes essential for the safety performance. Regarding the usage of the battery, it is a matter of course that it is unfavorable if the insulating crystalline polymer melts at a temperature low as the actual usage temperature of the battery, resulting in increase in resistance. In addition, if the PTC function is realized at a temperature above the ignition point of the electrolyte solution, the increase in the resistance would provide no contribution to the desired safety and is thus meaningless. The PTC function exhibiting temperature shall be selected by taking into account not only the current collector but also the other constitutions such as the electrolyte solution, active material, separator and the like. Here, in general, appropriate PTC function exhibiting temperature is 80 to 180°C. The exhibiting temperature can be adjusted arbitrarily depending on the electrical storage device.

Accordingly, the melting point of the insulating crystalline polymer is preferably in the range of 80 to 180°C, especially preferably in the range of 100 to 160°C. When the melting point is too high, the PTC function cannot be realized even when the battery is under abnormal heating. Therefore, there is no contribution to the safety, and is thus unfavorable. On the other hand, when the melting point is too low, the insulating crystalline polymer would melt at a temperature low as the actual usage temperature of the battery, resulting in increase in resistance. This is unfavorable in terms of the battery usage. The melting point can be in the range of two values selected from the group consisting of 80°C, 90°C, 100°C, 110°C, 120°C, 130°C, 140°C, 150°C, 160°C, 170°C, and 180°C.

There is no particular limitation regarding the insulating organic binder 112 contained in the conductive layer 104 of the present embodiment, so long as it has good adhesion with the metal foil 102 as the current collector 108 and with the active material layer 106. Here, it is preferable that the insulating organic binder 112 has crystallinity and has a melting point above the melting point of the insulating crystalline polymer. When the insulating organic has crystallinity and the melting point thereof is lower than the melting point of the insulating crystalline polymer forming the core particles 114 of the conductive filler 110, the insulating organic binder 112 would melt before the PTC function is realized, resulting in flowing of the conductive layer 104 itself. This would cause peeling off of the active material layer 106 and problems such as the increase in the resistance. The PTC function exhibiting temperature (in other words, the melting point of the insulating crystalline polymer forming the core particles of the conductive filler 110) shall be selected so that the resistance would increase at temperatures higher than the PTC function exhibiting temperature and the resistance would not increase at temperatures lower than the PTC function exhibiting temperature. When the melting point of the insulating organic binder 112 is lower than such temperature, unintended resistance increase can occur.

The insulating organic binder 112 contained in the conductive layer 104 of the present embodiment preferably has crystallinity and a melting point higher than the melting point of the insulating crystalline polymer. As such insulating organic binder 112, polyolefin introduced with a functional group having high polarity such as acid-modified polyolefin, ethylene-based copolymer such as ethylene-glycidyl methacrylate copolymer and ethylene-vinyl acetate copolymer, polyvinylidene difluoride, polysaccharide polymer and the like can be mentioned for example. Here, one or more of these can be selected and used. Among these, polyvinylidene difluoride and acid-modified substances thereof are preferably used since they are stable in the battery and are excellent in adhesion.

Here, the insulating organic binder 112 can be non-crystalline. Since there is no melting point in non-crystalline organic binder 112, there would be no phenomena where the resistance or the adhesion strength of the conductive layer 104 changes drastically from a certain temperature. Accordingly, the electric properties can be controlled with the conductive filler alone, allowing suitable adjustment of the PTC function depending on the various needs. In addition, many of the non-crystalline binders are softer than the insulating binders having crystallinity. This is advantageous in that many of the non-crystalline binders have excellent adhesion strength and thus it becomes easy to improve the adhesion with the metal foil and with the active material layer. As the non-crystalline binder, (meth)acrylic acid based copolymer, ethylene-propylene rubber, silicone rubber, polystyrene and the like can be mentioned for example.

The preferable ratio of the insulating organic binder 112 contained in the conductive layer 104 of the present embodiment depends on the shape and grain size of the conductive filler 110, the ratio of the thickness of the shell layer 116 and the core particles 114 in the core shell structure, and on the type of the insulating organic binder 112. Here, the preferable ratio is generally 0.1 to 0.99 when the total volume of the conductive filler 110 and the insulating organic binder 112 are taken as 1. The ratio is more preferably 0.5 to 0.95, and most preferably 0.7 to 0.9. Here, the ratio refers to a volume ratio. The ratio of the insulating organic binder 112 can be in the range of two values selected from the group consisting of 0.1, 0.2, 0.3, 0.4, 0.5, 0.6, 0.7, 0.8, 0.9, 0.91, 0.92, 0.93, 0.94, 0.95, 0.96, 0.97, 0.98, and 0.99.

<Electrode Structure>

The electrode structure 100 of the present embodiment is provided with an active material layer 106 comprising the active material, the active material layer 106 being provided on the conductive layer 104 formed on the metal foil 102. The active material layer 106 generally comprises an active material, binding agent, and a conductive assistant as the main composition. Since the electrode structure 100 is provided with an active material layer 106 being provided on the conductive layer 104 formed on the metal foil 102, the adhesion of the current collector 108 with the active material layer 106 is excellent, and thus it is expected that a low internal resistance as well as long lifetime can be achieved.

The active material particles contained in the active material layer 106 of the electrode structure 100 of the present embodiment can be a positive electrode active material or a negative electrode active material. Considering a case of the electrode structure 100 for the lithium ion secondary battery, there is no particular limitation regarding the positive electrode active material, so long as it can occlude and release the lithium ion. Specifically, the ones conventionally used, such as lithium cobalt oxide ($LiCoO_2$), lithium manganese ($LiMn_2O_4$), lithium nickel oxide ($LiNiO_2$), and ternary lithium compound system of Co, Mn, and Ni (Li ($Co_xMn_yNi_{1-x-y}$) $O_2$), sulfur based compound ($TiS_2$), olivine based compounds ($LiFePO_4$, $LiMnPO_4$) and the like can used. As the negative electrode active material, the ones conventionally known can be used. Specifically, black lead based compounds such as graphite, non-crystalline graphite based compounds, and oxide based compounds can be used, and there is no particular limitation.

In addition, considering a case of the electrode structure 100 for the electrical double layer capacitor, the ones conventionally known can be used as the active material. Specifically, black lead based compounds such as graphite, non-crystalline graphite based compounds, and oxide based compounds can be used, and there is no particular limitation.

As the binding agent used for binding the active material and to maintain the active material onto the current collector 108, fluorine based resin such as those represented by polyvinylidene difluoride, polysaccharide polymer, styrene-butadiene rubber and the like can be used, but are not limited to these.

The electrode structure 100 of the present embodiment is obtained as follows. An active material and a conductive assistant are dispersed in a solvent having a binding agent dissolved or dispersed therein to give a paste, and then the paste thus obtained is coated onto the conductive layer 104 formed on the metal foil 102 and dried. Accordingly, the active material layer 106 is formed and thus the electrode structure 100 is obtained.

Here, the non-aqueous electrolyte battery or the electrical storage device of the present embodiment can be manufactured by using the electrode structure of the present embodiment, a separator, and a non-aqueous electrolyte solution, in accordance with conventional methods.

The embodiments of the present invention have been described with reference to the Drawings. Here, they are merely an exemplification of the present invention, and the present invention can adopt various constituents other than those mentioned above.

**EXAMPLES**

Hereinafter, the present invention will be described in detail with reference to Examples. However, the present invention shall not be limited to these Examples.

<Example 1>

Preparation of Conductive Filler Having Core Shell Structure

The conductive filler having the core shell structure was prepared using ball mill. Polystyrene particles having an average grain size of 70 (melting point of 135°C) was used as the core particles comprising insulating crystalline polymer, and acetylene black (primary particles having an average grain size of 35 nm) was used as the conductive particles. Into a stainless steel pot (internal capacity of 930 ml) was added polyethylene particles (50g), acetylene black (15g), and stainless steel ball media (19mm diameter). The mixture was treated under rotation number of 120 rpm for 24 hours, and the surface of the complex particles obtained was subjected to scanning electron microscopy (SEM) observation to confirm that the polyethylene particles were coated with acetylene black (FIG. 4).

<Formation of Conductive Layer>

The conductive filler (0.75g) was formulated with 10 wt% N-methyl-pyrrolidone (NMP) solution of polyvilylidene difluoride (PVDF, melting point of 170°C) (30g), and the mixture was mixed using disper to achieve uniform dispersion. The paste thus obtained was coated onto the Al foil using an applicator, and then NMP was dried to give the current collector having the conductive layer.

<Example 2>

The same procedure was carried out as Example 1, except that polyethylene particles (grain size being 3μm, melting point being 121°C) were used as the core particles comprising insulating crystalline polymer, and that the formulation amount of the acetylene black was 30g, thereby obtaining a current collector having the conductive layer.

<Example 3>

The same procedure was carried out as Example 1, except that polypropylene particles (grain size being 5μm, melting point being 145°C) were used as the core particles comprising insulating crystalline polymer, and that the formulation amount of the acetylene black was 20g, thereby obtaining a current collector having the conductive layer.

<Example 4>

First, using a roll mixer, acetylene black was melt kneaded into polyethylene (melting point being 121°C) so that the acetylene black would be contained by 20 vol%, thereby obtaining the conductive polymer. The conductive polymer thus obtained and polyethylene (melting point being 121°C) were subjected to two-layer extrusion to give a strand having a core wire of polyethylene coated with the conductive polymer. Then the strand was further prolonged for line thinning, followed by cutting to obtain fiber shaped conductive filler comprising a core of polyethylene and a shell layer of conductive polymer. The same procedure was carried out as Example 1, except that this fiber was used, to obtain a current collector having the conductive layer.

<Example 5>

The same procedure was carried out as Example 1, except that 30 wt% polypropylene (melting point being 160°C) emulsion (10g) was used as the insulating organic binder solution, thereby obtaining a current collector having the conductive layer.

<Example 6>

The same procedure was carried out as Example 1, except that core shell particles in which the polyethylene particles (average grain size being 30μm, melting point being 128°C), was coated with gold to have a thickness of 100nm by deposition was used as the conductive filler having the core shell structure, thereby obtaining a current collector having the conductive layer.

<Example 7>

The flat shaped conductive filler prepared in Example 1 (0.25g) and fiber shaped conductive filler prepared in Example 4 (0.5g) were formulated with 10 wt% N-methyl-pyrrolidone (NMP) solution of polyvinylidene difluoride (PVDF, melting point of 170°C) (30g), and the mixture was mixed using disper to achieve uniform dispersion. The paste thus obtained was coated onto the Al foil using an applicator, and then NMP was dried to give the current collector having the conductive layer.

<Example 8>

The same procedure was carried out as Example 1, except that 10 wt% toluene solution of non-crystalline polystyrene (30g) was used as the insulating organic binder solution, thereby obtaining a current collector having the conductive layer.

<Example 9>

The same procedure was carried out as Example 1, except that ethylene-vinyl acetate copolymer particles (grain size being 50μm, VA being 14%, melting point being 90°C) were used as the core particles comprising insulating crystalline polymer, and that the formulation amount of the acetylene black was 20g, thereby obtaining a current collector having the conductive layer.

<Comparative Example 1>

The same procedure was carried out as Example 1, except that the procedure to prepare the conductive filler having the core shell structure was omitted and the polyethylene particles and acetylene black were formulated directly into the NMP solution of PVDF, thereby obtaining a current collector having the conductive layer.

<Comparative Example 2>

The same procedure was carried out as Example 1, except that particles comprising non-crystalline PMMA (grain size being 5μm) were used in place of the polyethylene particles, and that the formulation amount of acetylene black was 30g, thereby obtaining a current collector having the conductive layer.

<Comparative Example 3>

The conductive filler having the core shell structure obtained in Example 1 were thermally fused onto the current collector comprising metal foil without the usage of a binder, thereby obtaining a current collector having the conductive layer.

<PTC Function Evaluation>

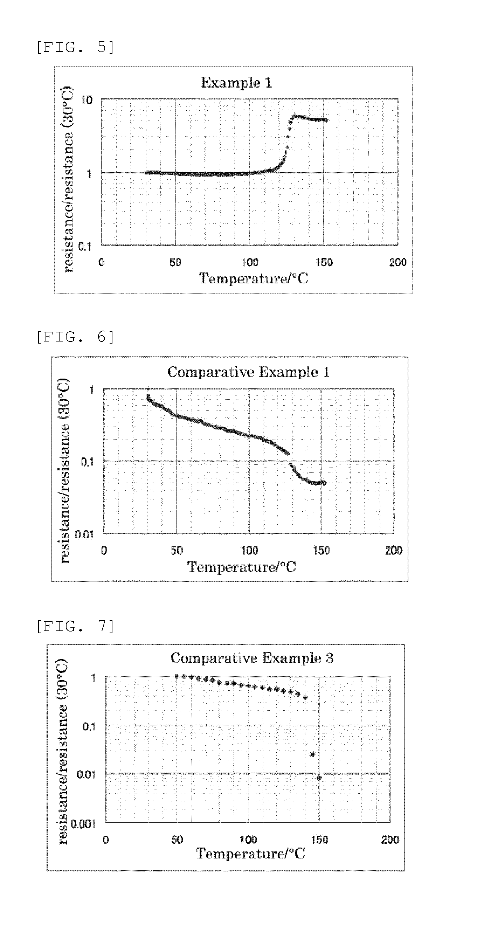

The current collector having the conductive layer thus obtained was punched out into a circle shape (1cmø) to prepare a measuring test piece. The test piece was sandwiched with brass electrodes, and was pressed with a load of 5N. Resistance of the current collector in such conditions was measured using an ohmmeter (available from HIOKI E.E. CORPORATION, 3451). The measurement value obtained at 30°C was taken as the initial resistance, and then the resistance was measured while the temperature was raised by 10°C/min upto 150°C. The results of measurement for Example 1, Comparative Example 1, and Comparative Example 3 are shown in FIGs. 5 to 7 as representative examples.
The ratio of maximum resistance and initial resistance (maximum resistance / initial resistance) obtained were recorded as PTC magnification. Here, when the resistance measured at a temperature higher than 30°C was the same as or lower than the initial resistance, "-" was recorded. The stability of the exhibition of the PTC function when the times of measurement was increased was expressed as (number of times PTC function was exhibited / number of measurement). The results are shown in Tables 1 and 2.

[Table 1]

| | | Example 1 | Example 2 | Example 3 | Example 4 |
|---|---|---|---|---|---|
| core particle | polymer | polyethylene | polyethylene | poly-propylene | polyethylene |
| | crystallinity | yes | yes | yes | yes |
| shell layer | | acetylene black | acetylene black | acetylene black | conductive polymer |
| shape | | flat | sphere | sphere | fiber |
| aspect ratio | | 10 | 1.2 | 1. 4 | 20 |
| core/shell ratio "a" | | 1.1 | 1. 3 | 1.2 | 1.2 |
| core shell achievement | | A | A | A | A |
| organic binder | type | PVDF | PVDF | PVDF | PVDF |
| PTC magnification | | 6 | 7 | 6 | 8 |
| stability | | 3/3 | 3/3 | 3/3 | 3/3 |
| normal resistance | | B | C | C | A |

[Table 2]

| | | Example 5 | Example 6 | Example 7 | Example 8 | Example 9 |
|---|---|---|---|---|---|---|
| core particle | polymer | polyethylene | poly-ethylene | polyethylene | polyethylene | EVA |
| | crystallinity | yes | yes | yes | yes | yes |
| shell layer | | acetylene black | gold | acetylene black and conductive polymer | acetylene black | acetylene black |
| shape | | flat | sphere | flat/fiber | flat | flat |
| aspect ratio | | 10 | 1.0 | 10/20 | 10 | 10 |
| core/shell ratio "a" | | 1.1 | 1.02 | 1.1/1.2 | 1.1 | 1. 1 |
| core shell achievement | | A | A | A | A | A |
| organic binder | type | polypropylene | PVDF | PVDF | polystyrene | PVDF |
| PTC magnification | | 6 | 7 | 7 | 6 | 5 |
| stability | | 3/3 | 3/3 | 3/3 | 3/3 | 3/3 |
| normal resistance | | B | C | A | B | B |

[Table 3]

|  |  | Comparative Example 1 | Comparative Example 2 | Comparative Example 3 |
|---|---|---|---|---|
| core particle | polymer | poly-ethylene | PMMA | poly-ethylene |
|  | crystallinity | yes | none | yes |
| shell layer |  | acetylene black (without core shell structure) | acetylene black | acetylene black |
| shape |  | – | sphere | flat |
| aspect ratio |  | – | 1 | 10 |
| core/shell ratio "a" |  | – | 1.2 | 1.1 |
| core shell achievement |  | B | A | A |
| organic binder | type | PVDF | PVDF | none |
| PTC magnification |  | – | – | – |
| stability |  | 0/1 | 0/1 | 0/1 |
| normal resistance |  | C | B | C |

Here, in Tables 1 and 2, the item of "core shell achievement" means the conditions as follows.

A: The conductive filler has the core shell structure.
B: The conductive filler does not have the core shell structure.

Here, the achievement of the core shell structure was confirmed by scanning electron microscope (SEM) observation.

In addition, the numerical values of "core / shell ratio "a"" were obtained by calculation of "a" using the following Formula 1, where the thickness of the shell layer was taken as $t_s$ and the grain size of the core particles was taken as $D_c$. The value of "a" was obtained from the image of the particle taken with a scanning electron microscopy (SEM).

$$a = (1 + 2t_s / D_c)^3 \quad (Formula\ 1)$$

That is, the value of "a" represents the volume ratio of the core shell particles with respect to the core particles. When the ratio becomes large, the thickness of the shell layer becomes large. Here, the value of "a" being 8 means that the radius of the core particles is the same as the thickness of the shell layer, and the value of "a" being 2 means that the volume of the shell layer and the volume of the core particles are the same.

Here, the evaluation results of the normal resistance shows the results of evaluation conducted with the resistance of the current collector measured at 25°C in accordance with the following criteria.

A: <1 (unit: $\Omega cm^2$)
B: 1 to 10 (unit: $\Omega cm^2$)
C: 10 to 100 (unit: $\Omega cm^2$)
D: >100 (unit: $\Omega cm^2$)

<Discussion of Results>

As shown in FIG. 5, Example 1 showed increase in resistance with respect to the temperature. Examples 2 to 9 also showed increase in resistance similarly. In addition, when the number of samples was increased (n=3), increase in the resistance was observed in a similar manner. On the contrary, the change in the resistance of Comparative Example 1 was as shown in FIG. 6, and increase in the resistance with respect to the temperature was not observed. Comparative Example 2 also did not show any increase in resistance similarly. The change in the resistance of Comparative Example 3 was as shown in FIG. 7, and increase in the resistance was not observed.

The present invention has been explained with reference to Examples. These Examples are provided merely as an exemplification, and it should be understood by the person having ordinary skill in the art that various modification can be made, and such modified examples are in the scope of the present invention.

**EXPLANATION OF SYMBOLS**

100: electrode structure
102: metal foil
104: conductive layer
106: active material layer
108: current collector
110: conductive filler (core shell particles)
112: insulating organic binder
114: core particles (insulating crystalline polymer)
116: shell layer (conductive material)
118: conductive particles
$t_s$: thickness of shell layer
$D_c$: grain size of core particles
$D_s$: grain size of conductive particles

**Claims**

1. A current collector, comprising:

   a metal foil; and
   a conductive layer formed on at least one side of the metal foil, the conductive layer being formed partially or entirely on the surface of the metal foil; wherein
   the conductive layer comprises core shell particles comprising:

      core particles having insulating crystalline polymer as a main component; and
      a shell layer having conductivity, the shell layer being formed on the surface of the core particles.

2. The current collector of Claim 1, wherein the insulating crystalline polymer has a melting point in a range of 80 to 180°C.

3. The current collector of any one of Claims 1 or 2, wherein the shell layer comprises conductive particles.

4. The current collector of Claim 3, wherein the conductive particles are conductive carbon.

5. The current collector of any one of Claims 1 to 4, wherein the shell layer comprises conductive polymer.

6. The current collector of any one of Claims 1 to 5, wherein the core shell particles are flat shaped or fiber shaped.

**7.** The current collector of any one of Claims 1 to 6, wherein the conductive layer further comprises an insulating organic binder; wherein

the insulating organic binder has crystallinity and has a melting point above the melting point of the insulating crystalline polymer; or

the insulating organic binder is non-crystalline.

**8.** The current collector of Claim 7, wherein the insulating organic binder comprises polyvinylidene difluoride (PVDF).

**9.** The current collector of any one of Claims 1 to 8, wherein the insulating crystalline polymer comprises polyethylene or polypropylene.

**10.** The current collector of any one of Claims 1 to 9, wherein the metal foil comprises an Al foil or a Cu foil.

**11.** An electrode structure, comprising:

the current collector of any one of Claims 1 to 10; and
an active material layer provided on the conductive layer of the current collector.

**12.** A non-aqueous electrolyte battery, comprising:

the current collector of any one of Claims 1 to 10; and
an active material layer provided on the conductive layer of the current collector.

**13.** An electrical storage device, comprising:

the current collector of any one of Claims 1 to 10; and
an active material layer provided on the conductive layer of the current collector.

**14.** A conductive filler being a core shell particle, comprising:

a core particle having insulating crystalline polymer as a main component; and
a shell layer having conductivity, the shell layer being formed on the surface of the core particle.

**15.** An electrode structure, comprising:

a metal foil; and
an active material layer; wherein
the active material layer comprises the conductive filler of Claim 14.

**16.** An electrical storage device, comprising:

a metal foil; and
an active material layer; wherein
the active material layer comprises the conductive filler of Claim 14.

[FIG. 1]

[FIG. 2]

[FIG. 3]

[FIG. 4]

[FIG. 5]

Example 1

[FIG. 6]

Comparative Example 1

[FIG. 7]

Comparative Example 3

# INTERNATIONAL SEARCH REPORT

| International application No. |
|---|
| PCT/JP2013/075119 |

**A. CLASSIFICATION OF SUBJECT MATTER**
*H01M4/66*(2006.01)i, *H01B5/00*(2006.01)i, *H01G11/66*(2013.01)i, *H01M4/13* (2010.01)i, *H01M4/62*(2006.01)i

According to International Patent Classification (IPC) or to both national classification and IPC

**B. FIELDS SEARCHED**

Minimum documentation searched (classification system followed by classification symbols)
H01M4/66, H01B5/00, H01G11/66, H01M4/13, H01M4/62

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2010-244788 A (Sharp Corp.),<br>28 October 2010 (28.10.2010),<br>claims 1, 4, 5; paragraphs [0001] to [0013],<br>[0021] to [0040], [0076]; examples 1 to 3<br>(Family: none) | 14-16<br>1-13 |
| X<br>Y | JP 2010-061941 A (Panasonic Corp.),<br>18 March 2010 (18.03.2010),<br>claims 1 to 3; paragraphs [0009] to [0022];<br>examples 1, 2<br>(Family: none) | 14<br>1-13 |
| Y | WO 1999/067835 A1 (Mitsubishi Electric Corp.),<br>29 December 1999 (29.12.1999),<br>claims 1, 2, 4 to 7; description, page 7, line<br>4 to page 14, line 13; examples 1 to 6<br>& EP 1035604 A1 & CN 1256798 A | 1-13 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 October, 2013 (22.10.13) | 05 November, 2013 (05.11.13) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2013/075119 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 10-241665 A  (Mitsubishi Electric Corp.), 11 September 1998 (11.09.1998), paragraphs [0001] to [0009], [0019] to [0034]; examples 1, 3; fig. 1 & US 2001/0041285 A1    & US 2002/0058182 A1 & EP 851517 A1            & DE 69704336 D & DE 69704336 T | 1-13 |
| A | JP 10-050294 A  (Sumitomo Bakelite Co., Ltd.), 20 February 1998 (20.02.1998), entire text; all drawings (Family: none) | 1-16 |
| A | JP 2009-176599 A  (Panasonic Corp.), 06 August 2009 (06.08.2009), entire text; all drawings (Family: none) | 1-16 |

Form PCT/ISA/210 (continuation of second sheet) (July 2009)

## INTERNATIONAL SEARCH REPORT

| International application No. |
| --- |
| PCT/JP2013/075119 |

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III**     **Observations where unity of invention is lacking (Continuation of item 3 of first sheet)**

This International Searching Authority found multiple inventions in this international application, as follows:

The technical feature common to the invention of claim 1 and the invention of claim 14 is "a core-shell particle which comprises a core particle that is mainly formed of an insulating crystalline polymer and a conductive shell layer that is formed on the surface of the core particle".

However, the above-said technical feature cannot be a special technical feature, since the technical feature is disclosed in both of the document 1 and the document 2 as stated in Box No. V.

Further, there is no other special technical feature between both the inventions.

(Continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## INTERNATIONAL SEARCH REPORT

International application No.

PCT/JP2013/075119

<u>Continuation of Box No.III of continuation of first sheet(2)</u>

Consequently, there is no special technical feature among a group of inventions set forth in claims 1-16 for so linking said group of inventions as to form a single general inventive concept.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7220755 A
- JP H10241665 A
- JP 2001357854 A
- JP 2010061941 A